# EUROPEAN PATENT APPLICATION

(11) **EP 2 027 983 A1**
(43) Date of publication of application: **25.02.2009**
(21) Application number: 07398012.0
(22) Date of filing: 21.08.2007
(51) Int. Cl.: B29C 45/16

(54) **Process and apparatus for injection molding of two plastic materials**

(71) Applicant: Daviplast - Serviços de Consultoria, Sociedade Unipessoal LDA., 9000 Funchal, Madeira (PT)
(72) Inventor: Cassina, Virginio, 24020 Gorle (Bergano) (IT)
(74) Representative: Simino, Massimo

(57) **Abstract**

A process for injection molding in a mold (10) having two mold halves (11, 12) which define a first molding cavity (13) and an element (14, 30) that is mounted (11) in a mold half (11) in such a manner as to be movable between two opposite stroke end positions, comprises the steps of closing the mold, injecting a first plastic material into the first molding cavity (13) to obtain a first molded component (40), displacing and stopping the movable element (14, 30) in a position between the two stroke end positions, to provide a second molding cavity (15) connected to the first molding cavity (13), and injecting a second plastic material into the second molding cavity (15) to obtain a second molded component (41) that is integrally joined to the first molded component (40). The apparatus (1) has drive means (20) for moving the movable element (14, 30) and stopping it in a position between the two opposite stroke end positions, to provide the second molding cavity (15).

## Description

This invention relates to a process for injection molding of two plastic materials and an apparatus for injection molding of two plastic materials.

Injection molding is an industrial process in which a melted plastic material, of thermoplastic, thermosetting or elastomeric nature, is injected into a mold at a certain pressure. Injection occurs at such temperatures and pressures as to allow the plastized material to enter the mold and adhere to the mold walls while filling the cavity, to form the molded part.

A typical injection molding apparatus comprises two mold halves which are designed to be closed together to define a molding cavity in which the plastic material is injected to form the molded part.

The two mold halves are kept closed by hydraulically, mechanically or electrically operated molding machines.

In order to obtain a molded part formed of two molded components of two different plastic materials it has been suggested, for example, to mold a first component of a first plastic material in a first mold and to transfer such first molded component to a second mold. Such second mold has a molding cavity for partially receiving the first molded component and in which the second plastic material is over-injected to obtain a finished part composed of the two components of different materials.

Nevertheless, this technique requires the use of two different molds or molds having multiple molding cavities, with rotary tables and manipulators for transferring molded parts, thereby increasing the costs for manufacture and molding system management.

Thus, the need arises of providing a process for injection molding and an apparatus for injection molding of plastic materials that can form finish parts without using a second mold.

Therefore, the object of this invention is to provide a process for injection molding and an apparatus for injection molding of plastic materials that has such features as to fulfill the above need, while obviating the drawbacks of prior art.

This object is achieved by a process for injection molding as defined in claim 1 and by an apparatus for injection molding of plastic materials as defined in claim 8.

By the motion of a movable element inserted in one of the two mold halves, two or more molding cavities can be formed, for successive injection and molding of two or more plastic materials therein, to thereby obtain two or more molded components integrally joined together to form a single molded part.

Further features and advantages of the process for injection molding and the apparatus for injection molding of plastic materials according to this invention, will be apparent from the following description of one preferred embodiment thereof, which is given by way of illustration and without limitation with reference to the accompanying figures, in which:

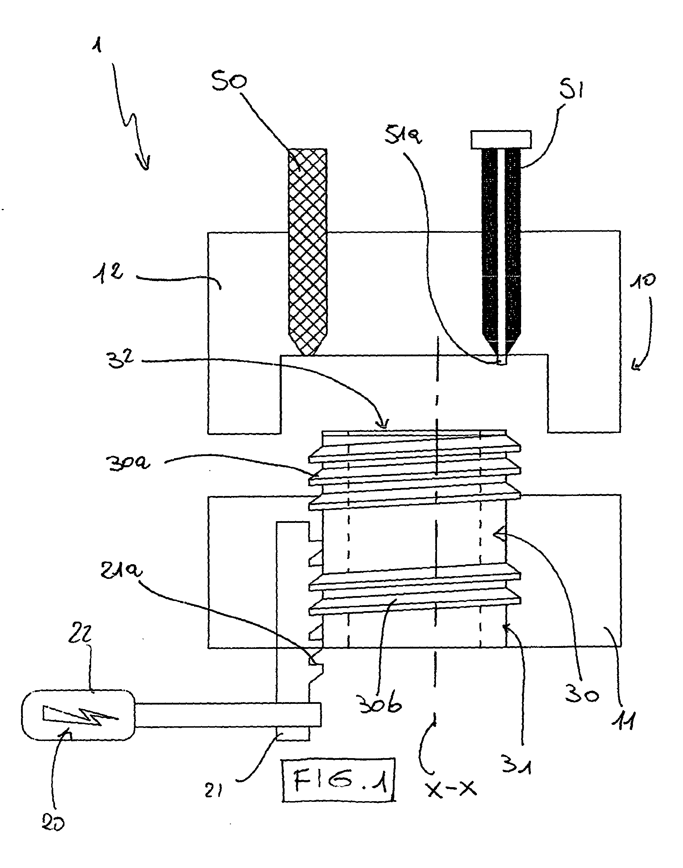

- Figure 1 shows an apparatus for injection molding of two plastic materials according to the present invention,
- Figures 2 to 4 are plan views of the apparatus of Figure 1 through the successive steps of the process for injection molding of this invention, according to a first embodiment,
- Figure 5 is a cross sectional view of the molded part obtained through the steps of the process, as shown in Figures 2 to 4,
- Figures 6 to 8 are plan views of the apparatus of Figure 1 through the successive steps of the process for injection molding of this invention, according to a second embodiment,
- Figure 9 is a sectional view of the molded part obtained through the steps of the process, as shown in Figures 6 to 8,
- Figures 10 to 12 are plan views of the apparatus of Figure 1 through the successive steps of the process for injection molding of this invention, according to a third embodiment,
- Figure 13 is a sectional view of the molded part obtained through the steps of the process, as shown in Figures 10 to 12,

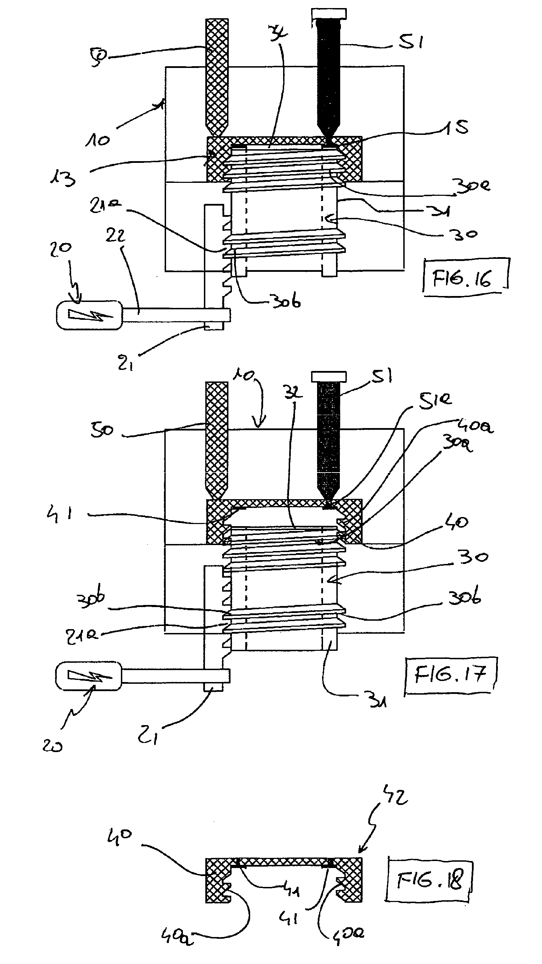

- Figures 14 to 17 are plan views of the apparatus of Figure 1 through the successive steps of the process for injection molding of this invention, according to a fourth embodiment, for forming a threaded molded part and
- Figure 18 is a sectional view of the molded part obtained through the steps of the process, as shown in Figures 14 to 17.

Referring to the annexed figures, numeral 1 generally designates an apparatus for injection molding of plastic materials according to the present invention.

While reference will be made hereinafter to two thermoplastic materials, it shall be understood that thermosetting and/or elastomeric materials may be used as well. Additives, such as colorants, foaming agents etc., may be added to such materials to change their characteristics.

The apparatus 1 comprises a mold 10 having a first mold half 11 and a second mold half 12 which are designed to be closed together to define a first molding cavity 13 for receiving a first thermoplastic material.

As described in greater detail below, injection of the first thermoplastic material into the first molding cavity 13 allows molding of a first molded component 40.

As known per se, the apparatus 1 comprises a support frame having mounted thereon a stationary platen for supporting one of the two mold halves, e.g. the mold half 11, and a movable platen for supporting the other mold half, in this example the mold half 12. The apparatus 1 further comprises means for supporting and guiding the movable platen, drive means for closing the mold, a plasticizing and injection unit, supply means, e.g. hydraulic or power supply means, which serve the drive means for closing the mold, as well as electronic control means, for controlling the drives of the various components of the apparatus.

The apparatus 1 includes an element 14, which is mounted in one of the two mold halves 11, 12, here in the mold half 11, in such a manner as to be movable between two opposite stroke end positions, and drive means, generally designated by numeral 20, here an electric motor, for operating the movable element 14 to move such movable element 14 between the two opposite stroke end positions.

Particularly, the drive means 20 are adapted to move the movable element 14 to at least one position between the two opposite stroke end positions, and stop it therein, to provide a second molding cavity 15 in the mold half 11, which is connected to the first molding cavity 13 and is adapted to receive a second thermoplastic material.

The motion of the movable element provides a second molding cavity connected to the first molding cavity, for injection of the second thermoplastic material. It shall be underlined that the second molding cavity 15 created by the motion of the movable element 14 is connected to the first molding cavity 13, and hence to the first molded component 40 in the first molding cavity 13. Thus, the second molded component 41 obtained from the injection of the second thermoplastic material into the second molding cavity 15 will be integrally joined to the first molded component 40, thereby forming a single molded part 42 made of two different thermoplastic materials.

Also, by stopping the movable element 14 in at least one position between the two stroke end positions, a second variable volume molding cavity is provided, which is connected to the first molding cavity. This characteristic is highly advantageous if the second thermoplastic material, thus the second molded component 41 is designed, for instance, to act as a seal. In this case, by adjusting the volume of the second molding cavity, the height or thickness of the seal may be also adjusted. The side walls of the second molding cavity are stationary and so is the top wall of the second molding cavity, which is closed at its top by the first molded component 40. Seal height adjustment allows use of a single type of seal of different heights to items such as lids, caps, and the like.

Advantageously, the two thermoplastic materials have such physical properties as to allow them to be "joined", i.e. sealed together during the injection molding cycle. For example, the first material may be high density polyethylene (HDPE) and the second material may be a thermoplastic elastomer (TPE). Otherwise, mechanical fastening arrangements may be provided between the two molded components for integrally joining the two molded components.

The two thermoplastic materials are injected through two separate injection nozzles 50, 51, typically shut-off nozzles, which are disposed, in this example, in the mold half 12, namely the nozzle 50 for the first thermoplastic material and the nozzle 51 for the second thermoplastic material.

According to one embodiment, the movable element 14 comprises a threaded portion 14a, the drive means 20 including an element 21 with threads 21a thereon, mating with the threaded portion 14a of the movable element 14. As the two threaded portions 14a and 21 are mated together, the rotation of the threaded element 21 with the threads 21a causes the rotation of the movable element 14 about its longitudinal axis, designated as X-X in the figures, and the displacement of the movable element 14 along such longitudinal axis X-X.

In accordance with one embodiment of the invention, the drive means 20 include an electric motor 22 for rotating the element 21 with the threads 21a to cause rotation of the movable element 14 and consequent displacement of the movable element 14 along its longitudinal axis X-X.

In order to form a first threaded molded component 40, such as a lid that is designed to ensure a sealing action, a cap or the like, the mold half 11 comprises a male element 30 which is mounted in such a manner as to be movable relative to the mold half 11 and has a threaded portion 30a projecting out of the half mold 11 into the first molding cavity 13. This threaded portion 30a of the male element 30 forms a corresponding complementary threaded portion 40a in the first molded component 40 in the first molding cavity 13. It shall be noted that the threaded portion 30a of the male element 30 defines the first molding cavity 13 with the mold halves 11 and 12, when the two mold halves 11, 12 are in a closed configuration.

In this example, the male element 30 has an outer ring 31 that carries the threaded portion 30a, and an inner core 32.

The second molding cavity 15 can be formed, for example, by partially unscrewing the outer ring 31 of the male element 30, so that the position of the inner core 32 of the male element 30 is left unchanged, thereby defining the second molding cavity 15.

Once the first threaded molded component has been molded in the first molding cavity 13 and the second molded component 41 has been molded in the second molding cavity 15, the first molded component 40 has to disengage completely from the threaded portion 30a of the male element 30.

In order to rotate the outer ring 31 and then completely unscrew the movable male element 30, according to a first embodiment, the drive means 20 include an element 21 with threads 21a mating with a threaded portion 30b of the male element 30, particularly the outer ring 31, opposite to the threaded portion 30a, so that the rotation of the element 21 causes a corresponding rotation of the outer ring 31 of the male element 30 about its longitudinal axis, which coincides in this example with the longitudinal axis X-X, and the displacement of the movable male element 30, with its outer ring 31 and its inner core 32, along its longitudinal axis X-X. Alternatively, a second electric motor may be provided, which is independent of the electric motor 20 and has a threaded element engaged in the threads 30b of the male element 30.

According to one embodiment, the pitch of the threads 30b of the male element 30, mating with the threads 21a of the element 21, shall be equal to the pitch of the threads 30a to prevent stripping of the molded threads 49 of the first molded component 40 during unscrewing.

The process for injection molding of the present invention will be now disclosed, which is carried out in a mold 10 comprising two mold halves 11, 12, designed to be closed together to define the first molding cavity 13 and the element 14 which is mounted in such a manner as to be movable in one of the two mold halves, in this example in the mold half 11, between the two opposite stroke end positions.

The process for injection molding includes the steps of:
a) closing the mold 10,
b) injecting the first thermoplastic material, through the first nozzle 50, into the first molding cavity 13 to obtain a first molded component 40,
c) adjusting the position of the movable element 14 and stopping the movable element 14 in a position between the two opposite stroke end positions, to provide a second molding cavity 15 connected to the first molding cavity 13, and
b) injecting a second thermoplastic material, through the second nozzle 51, into the second molding cavity 15 to obtain a second molded component 41, which is integrally joined to the first molded component 40.

Particularly, once the mold 10 has been closed, such as by presses and known hydraulic drives, the first nozzle 50 injects the first thermoplastic material in a melted state under pressure into the first molding cavity 13.

Then, once the movable element 14 or 30 has been displaced, the second nozzle 51 injects the second thermoplastic material under pressure into the second molding cavity. It shall be noted that the second nozzle 51 has an end portion 51a within the first molding cavity 13. As the first thermoplastic material is injected into the first molding cavity 13, such end portion 51a is in such a position as to allow injection of the second thermoplastic material into the second molding cavity 15, through the first molded component 40.

Finally, the material introduced in the mold is allowed to cool and solidify in the mold, whereupon the mold is opened to eject the molded part.

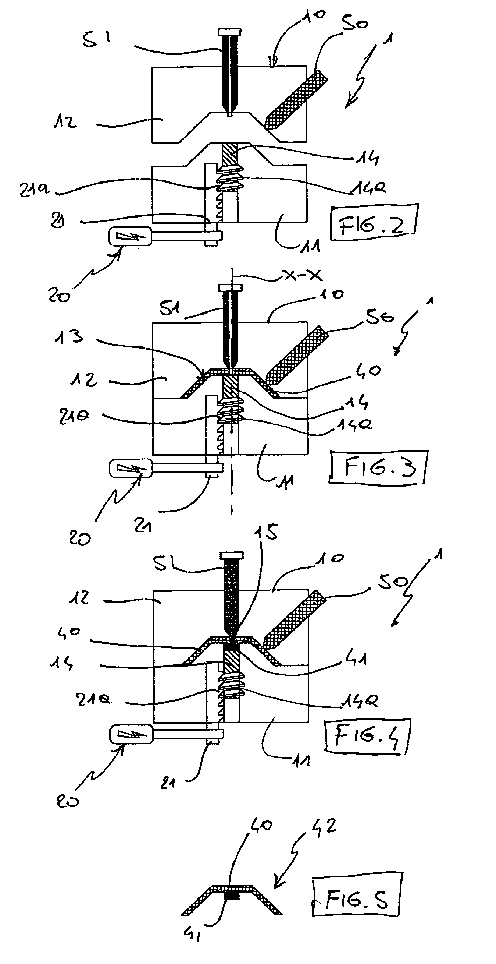

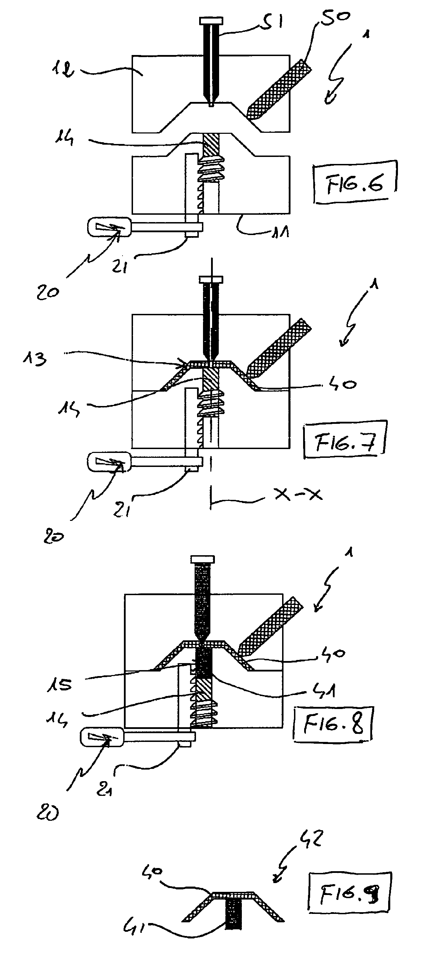

According to a first embodiment, as shown in Figures 2 to 9, during the step b) of injecting the first thermoplastic material, the movable element 14 is in a stroke end position (see Figures 3 and 7). In this case, the step c) of adjusting and stopping includes the steps of moving the movable element 14 from the stroke end position to an intermediate position between the two opposite stroke end positions and stopping the movable element 14 in such intermediate position.

As such intermediate position changes (see Figures 4 and 8), the height of the second molded component 41 also changes.

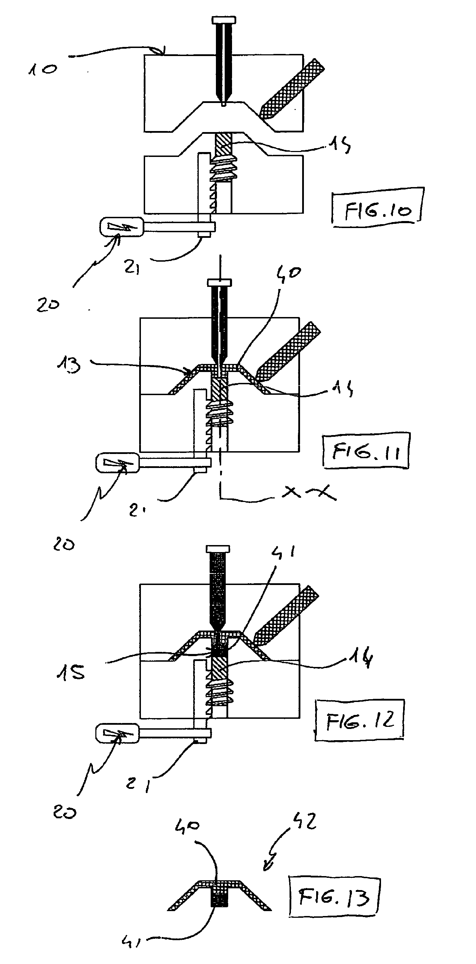

According to a second embodiment, as shown in Figures 10 to 13, during the step b) of injecting the first thermoplastic material, the movable element 14 is in a first intermediate position between the two opposite stroke end positions (see Figure 11). For this purpose, the step b) of injecting the first thermoplastic material is preceded by a step a1) of adjusting the position of the movable element 14 and stopping the movable element 14 in the first intermediate position. It can be noted that, in this configuration, the first molding cavity 13 extends into the mold half 11.

In this case, the step c) of adjusting and stopping includes the steps of moving the movable element from the first intermediate position to a second intermediate position between the first intermediate position and a stroke end position, and stopping the movable element 14 in such intermediate position. This affords adjustment of the volume of the first molding cavity in addition to the volume of the second molding cavity 15.

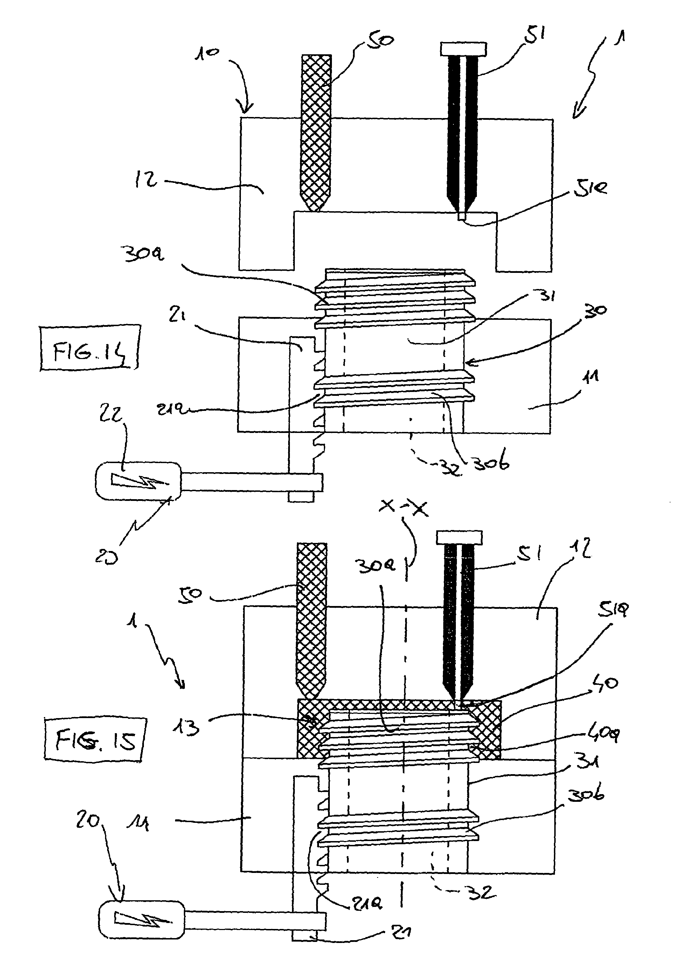

If the first molded component 40 is designed to have a threaded portion 40a, during the step b) of injecting the first thermoplastic material, the movable element 30 may be in a stroke end position, as shown in Figure 15, or in a first intermediate position between the two opposite stroke end positions.

It will be appreciated from the above that the process for injection molding and the apparatus for injection molding of plastic materials of the present invention obviates the prior art drawbacks. Namely, the presence of an element in one of the two mold halves, that can be moved between two opposite stroke end positions and be stopped in intermediate positions between the two opposite stroke end positions defines a second molding cavity connected to a first molding cavity.

Particularly, thanks to the presence of the movable element, controlled volume adjustment is afforded both in the second molding cavity and, advantageously, in the first molding cavity.

Those skilled in the art will obviously appreciate that a number of changes and variants may be made to the process for injection molding and the apparatus for injection molding of plastic materials according to the invention as described hereinbefore to meet specific needs, without departure from the scope of the invention, as defined in the following claims.

## Claims

1. A process for injection molding in a mold (10) comprising two mold halves (11, 12), designed to be closed together to define a first molding cavity (13) and an element (14, 30) mounted movable in one of the two mold halves (11) between two opposite stroke end positions, said process including the steps of:
a) closing the mold (10),
b) injecting a first plastic material into said first molding cavity (13) to obtain a first molded component (40),
c) adjusting the position of said movable element (14, 30) and stopping the movable element (14, 30) in a position between said two opposite stroke end positions, to provide a second molding cavity (15) connected to said first molding cavity (13),
b) injecting a second plastic material into said second molding cavity (15) to obtain a second molded component (41), which is integrally joined to the first molded component (40).

2. A process as claimed in claim 1 wherein, during said step b) of injecting the first plastic material, said movable element (14, 30) is in a stroke end position.

3. A process as claimed in claim 2, wherein said steps c) of adjusting and stopping include the steps of moving said movable element (14, 30) from said stroke end position to an intermediate position between said two opposite stroke end positions and stopping said movable element (14, 30) in said intermediate position.

4. A process as claimed in claim 1 wherein, during said step b) of injecting the first plastic material, said movable element (14, 30) is in a first intermediate position between said two opposite stroke end positions.

5. A process as claimed in claim 4, wherein said step b) of injecting the first plastic material is preceded by a step a1) of adjusting the position of said movable element (14, 30) and stopping the movable element (14, 30) in said first intermediate position.

6. A process as claimed in claim 4 or 5, wherein said first molding cavity (13) extends into said one half mold (11).

7. A process as claimed in any one of claims 4 to 6, wherein said steps c) of adjusting and stopping include the steps of moving said movable element (14, 30) from said first intermediate position to a second intermediate position between said first intermediate position and a stroke end position and stopping said movable element (14, 30) in said second intermediate position.

8. A process as claimed in any one of claims 1 to 7, wherein said first material is a thermoplastic material and said second material is a thermoplastic elastomer.

9. A process as claimed in any one of claims 1 to 8, wherein at least one of said first and second materials is added with additives.

10. An apparatus (1) for injection molding, commprising:
a mold (10) having two mold halves (11, 12) which are designed to be closed together to define a first molding cavity (13) for receiving a first plastic material,
- an element (14, 30) mounted movable in one (11) of said two mold halves (11, 12) between two opposite stroke end positions,
- drive means (20) for moving said movable element (14, 30) between said two opposite stroke end positions, **characterized in that**
said drive means (20) are adapted to move and stop said movable element (14, 30) to at least one position between said two opposite stroke end positions to provide a second molding cavity (15) in said one mold half (11), for receiving a second plastic material, said second molding cavity being connected to said first molding cavity (13).

11. An apparatus (1) as claimed in claim 10, wherein said movable element (14, 30) comprises a threaded portion (14a, 30b), said drive means including an element (21) with threads (21a) thereon, mating with the threaded portion (14a, 30b) of the movable element, the rotation of said threaded element (21) causing the rotation of said movable element (14, 30) about its longitudinal axis (X-X) and the displacement of said movable element (14, 30) along said longitudinal axis (X-X).

12. An apparatus (1) as claimed in claim 11, wherein said drive means (20) include a motor which is adapted to rotate said element (21) with threads (21a) to cause rotation of the movable element (14, 30).

13. An apparatus (1) as claimed in claim 11 or 12, wherein said movable element is a male element (30) that is mounted in such a manner as to be movable relative to the mold half (11) and having a threaded portion (30a) projecting out of said mold half (11) into said first molding cavity (13), said threaded portion (30a) of the movable male element (30) forming a corresponding complementary threaded portion (40a) in the first molded component (40) molded in said first molding cavity (13).

14. An apparatus (1) as claimed in claim 13, wherein said drive means (20) are adapted to rotate said movable male element (30) to unscrew said threaded portion (30a) of the movable male element (30) from the complementary threaded portion (40a) of the first molded component (40), that is molded in said first molding cavity (13).

15. An apparatus (1) as claimed in any one of claims 11 to 14, comprising control means for controlling said drive means (20) to adjust the position of said movable element (14, 30).
